Europäisches Patentamt

European Patent Office

Office européen des brevets

(11) Publication number: **0 292 147**
**A2**

## (12) EUROPEAN PATENT APPLICATION

(21) Application number: 88304022.2

(22) Date of filing: 04.05.88

(51) Int. Cl.4: **B60R 1/02 , G02B 7/18 , F16C 11/10**

(30) Priority: 04.05.87 AU 1720/87

(43) Date of publication of application:
**23.11.88 Bulletin 88/47**

(84) Designated Contracting States:
**DE ES FR GB**

(71) Applicant: **BRITAX RAINSFORDS PTY. LTD.**
**Sherrifs Road**
**Lonsdale South Australia(AU)**

(72) Inventor: **Fimeri, Garry Gordon Leslie**
**22 Golflands View Morphett Vale**
**South Australia(AU)**

(74) Representative: **Hollinghurst, Antony**
**Britax Limited Patent Department**
**Chichester West Sussex PO19 2AQ(GB)**

(54) **Mirror mounting means.**

(57) A mirror holder has a socket which engages a ball in a ball-and-socket mounting, the socket wall however being divided into claws by at least three radially extending slits, the claws being engaged by a generally triangular metal spring.

FIG 1

EP 0 292 147 A2

This invention relates to a mounting means for a mirror of a type which can be adjusted to occupy an orientation variable in both an horizontal direction and a vertical direction.

## BACKGROUND OF THE INVENTION

Rear vision mirrors for motor vehicles must be capable of being adjusted with respect to deflection both in the horizontal and vertical planes, and heretofore such an adjustment has been achieved by use of a ball-and-socket mounting between a mirror support arm and a mirror holder. The ball usually enters an aperture in the mirror holder which is defined by a part-spherical surface, and a frictional resistance to movement is imparted by the resilience of the wall of the spherical mounting, in some instances there being provided slits in that wall which divide it into claws which can move more readily than a continuous wall surrounding the ball.

However, even with the use of slits, some difficulties are encountered particularly under conditions where there are wide variations in temperature. For example, on a very hot day, the co-efficient of friction of a plastic material may vary, and its pressure against the ball might also vary because of the relaxation, par-ticularly in the case of a thermoplastic, which also expands at a much greater rate than metal.

On the other hand, in very cold weather, there can be a binding effect between the rubbing surfaces of the socket of a mirror holder and the ball which supports it, such that the softer material (usually the thermoplastics material of the mirror holder) can be damaged.

## BRIEF SUMMARY OF THE INVENTION

The main object of this invention is to provide a means whereby the frictional engagement between a supporting ball and a mirror holder has considerably less variation than in prior art mirrors, and in an embodiment of this invention a mirror holder has a socket which engages a ball in a ball-and-socket mounting, the socket wall however being divided into claws by at least three radially extending slits, the claws being engaged by a generally triangular metal spring.

The triangular spring can be made from metal strip or wire which will vary only slightly with temperature change, so that a much more nearly constant pressure can be imparted by the socket wall against the ball, than the pressure which is imparted solely by the resilience of the thermoplastics material.

More specifically the invention consists of a mirror mounting means for a mirror assembly which is pivotal with respect to a base in each of two planes, wherein the mirror assembly comprises a mirror holder, means retaining a mirror to a front face of the mirror holder, one element of a ball-and-socket mounting projecting from a rear face of the mirror holder the other element of the ball-and-socket mounting projecting from the base and engaging the first said element, one of said elements comprising a socket wall, at least three slots dividing the socket wall into claw-like sectors and a spring having three sides surrounding the socket wall and bearing against the sectors thereof.

It is known that use has already been made of a multi-turn spiral spring surrounding a socket wall but this has been found generally unsatisfactory due to the inability of a spiral spring to move with respect to its supporting surface as temperatures vary. However with the invention herein described, the spring rate is such that an approximately constant pressure is applied to the claws of the socket wall over a wide range of deflection, and there is no sliding movement between the socket wall and the spring upon temperature change.

The invention is applicable to mirrors in general, but its advantages are most valuable when applied to rear vision mirrors of motor vehicles.

## BRIEF DESCRIPTION OF THE DRAWINGS

Embodiments of the invention are described hereunder in some detail with reference to, and are illustrated in, the accompanying drawings in which:-

Fig. 1 is an "exploded" perspective view illustrating a first embodiment and showing a mirror assembly, base and spring;

Fig. 2 is a rear elevation of an externally mountable rear vision mirror generally according to our co-pending Application No.      ;

Fig. 3 is a plan section taken on line 3-3 of Fig. 2; and

Fig. 4 is a fragmentary section of the ball-and-socket mounting, taken on line 4-4 of Fig. 3, but drawn to a larger scale.

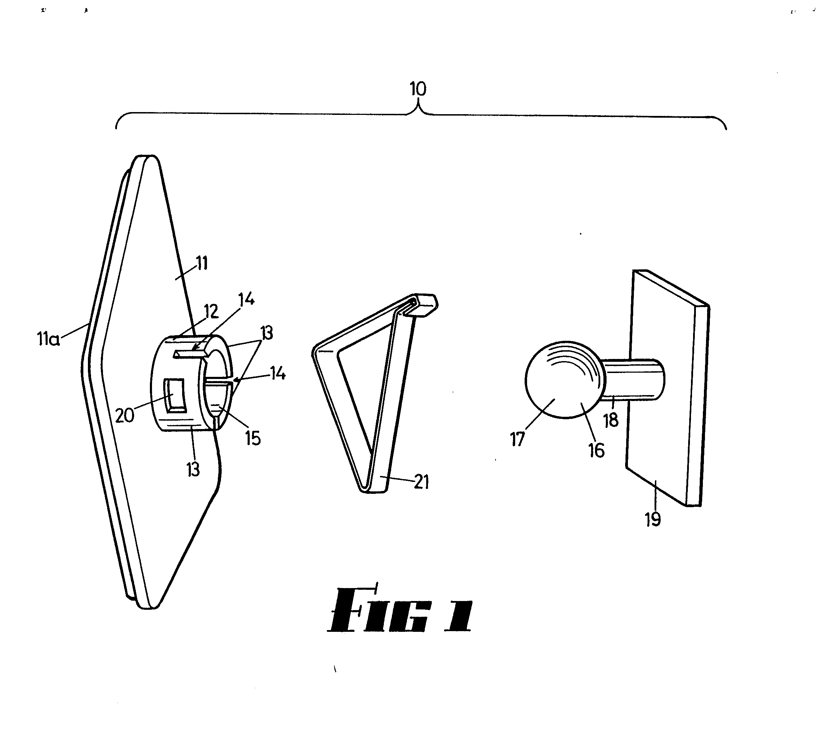

In the first embodiment of Fig. 1, a mirror assembly 10 comprises a holder 11 formed from thermoplastics material (in this example, polypropylene) having a flange which retains a mirror 11a on its front face, and its rear surface is provided with a socket wall 12 divided into three claw-like sectors 13 by axially extending slots 14, the wall 12 having an inner surface 15 which is generally spherical. The spherical surface 15 engages the outer surface 16 of a ball 17 carried on the end of a spigot 18 projecting from a supporting base 19, which, in Fig. 1, is arranged to be adhered to a windscreen of a motor vehicle.

The difficulty encountered heretofore, due to variation of frictional engagement between the spherical wall and the ball surface, is herein overcome by applying a force to each of the claw-like sectors 13 of the wall urging the respective sectors radially inward. This is achieved by providing a small land 20 in the centre of each claw sector, and the three lands 20 are themselves engaged by surfaces of a spring 21 which has been formed from flat steel strip to a generally triangular shape, and had its ends joined at an apex of said shape.

Inter alia, the beam length of a spring side determines the pressure imparted against its claw sector urging it into contact with the ball surface 16. The longer the length, the less pressure and the better the spring rate, although spring rate is less critical than in some applications since there is negligible spring movement. Thus a compromise between undesirable pressures can readily be achieved, and the triangular flat spring 21 will apply equal pressures to the three sectors of the ball engaging boss.

By making use of three, instead of two or four, arms of the metal spring 21, the pressure applied to the claw sectors is equal for movement of the mirror housing in both horizontal and vertical directions. If use is made of only two, the tension against movement would be very much greater in one direction than the other. If use is made of a four-sided spring, the self alignment of the spring and equal pressure applied to the claw sectors would be difficult to achieve. However experiments have shown that with a generally triangular flat spring, the pressure applied against the sectors of the boss is substantially unchanged notwithstanding wide variations in temperature.

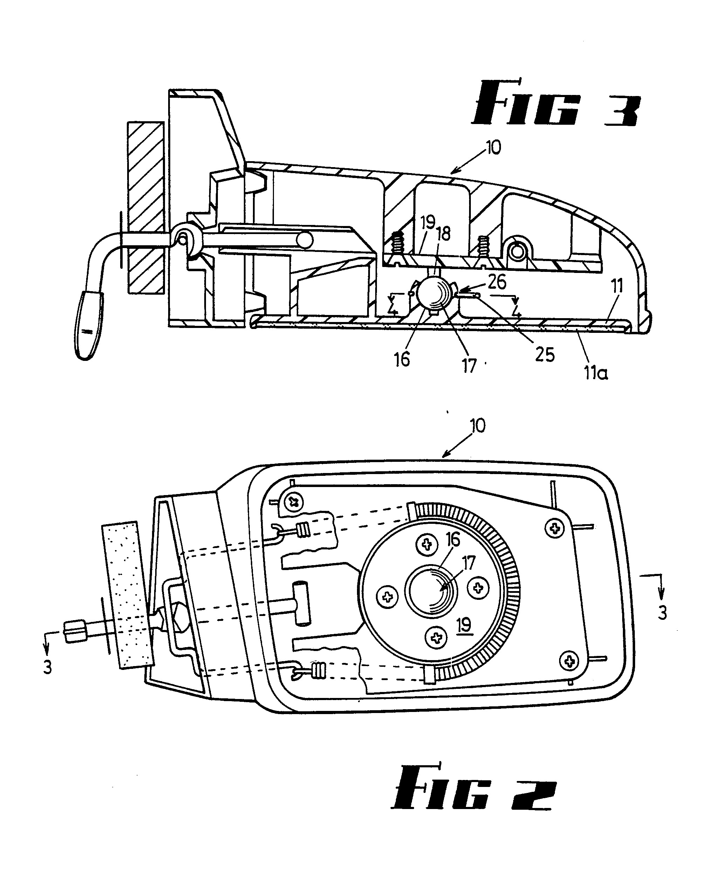

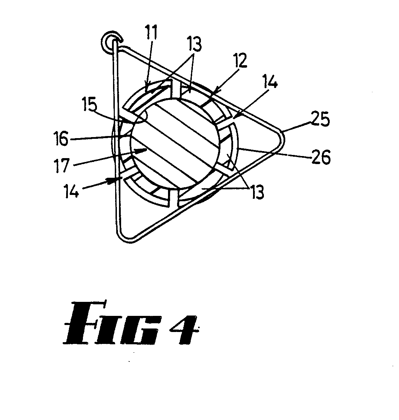

It is not necessary in all instances for the number of claw-like sectors 13 to be limited to three, and in the second embodiment of Figs. 2, 3 and 4, there are six slots 14 in the socket wall 12, and six sectors 13. (The number can be greater.) The triangular spring designated 25 is of wire, and lies in a peripheral groove 26 intermediate the ends of the limbs. Its location around the circumference is not important. Further details of the "breakaway" assembly shown in Figs. 2 and 3 are to be found in our co-pending Application No.   of even date.

**Claims**

1. Mirror mounting means for a mirror assembly which is pivotal with respect to a base in each of two planes,

wherein the mirror assembly comprises a mirror holder, means retaining a mirror to a front face of the mirror holder, one element of a ball-and-socket mounting projecting from a rear face of the mirror holder,

the other element of the ball-and-socket mounting projecting from the base and engaging the first said element,

one of said elements comprising a socket wall, at least three slots dividing the socket wall into claw-like sectors and a spring having three sides surrounding the socket wall and bearing against the sectors thereof.

2. Mirror mounting means according to claim 1 wherein said socket wall comprises three axially extending slots which divide that wall into three claw-like sectors, the outer surface of each said sector comprising a land, and each side of said spring engages a respective said land.

3. Mirror mounting means according to claim 2 wherein said spring comprises a flat steel strip which has been formed to a triangular shape, and has had its ends joined at an apex of said shape.

4. Mirror mounting means according to claim 1 wherein there are at least six said slots dividing the socket wall into an equal number of said sectors, the outer surface of that wall containing a groove extending around those sectors, and wherein said spring comprises a spring wire which has been formed to a triangular shape, and has had its ends joined at an apex of that said shape, said wire engaging the wall of said groove.

5. Mirror mounting means according to claim 1 wherein said socket wall is the element of the ball-and-socket mounting which projects from the rear face of the mirror holder, and the other element of that mounting is a ball.

6. Mirror mounting means according to claim 5 further comprising a spigot projecting from the base, said ball being on the projecting end of said spigot.

10

11a

11

12

14

13

13

14

20

15

13

21

17

16

18

19

**FIG 1**

0 292 147

**FIG 3**

10

19 18

26

11

16    17    25

11a

10

16

17

19

3

3

**FIG 2**

FIG 4